# EUROPÄISCHE PATENTANMELDUNG

(11) **EP 0 872 457 A1**
(43) Veröffentlichungstag der Anmeldung: **21.10.1998**
(21) Anmeldenummer: 93710017.0
(22) Anmeldetag: 23.09.1993
(51) Int. Cl.: C03B 33/095

(54) **Vorrichtung zum Recyceln von Bildröhren und Verfahren unter Verwendung der Vorrichtung**

(30) Priorität: 20.10.1992 DE 4235304
(71) Anmelder: R+T UMWELT GmbH, D-04299 Leipzig (DE)
(72) Erfinder: Gentzsch, Hans, D-14715 Mögelin (DE); Stamer, Günther, D-14727 Premnitz (DE)

(57) **Zusammenfassung**

Die vorliegende Erfindung betrifft eine Vorrichtung zum Auftrennen von Bildröhren in Conusglas und Schirmglas, wobei der Übergangsbereich zwischen den Gläsern lokal erhitzt wird und anschließend der erhitzte Bereich abgeschreckt wird.

Die vorliegende Erfindung betrifft ferner ein Verfahren unter Verwendung der Vorrichtung.

## Beschreibung

Die vorliegende Erfindung betrifft eine Vorrichtung zum Auftrennen von Bildröhren in Conusglas und Schirmglas, wobei der Übergangsbereich zwischen den Gläsern lokal erhitzt wird und anschließend der erhitzte Bereich abgeschreckt wird.

Die vorliegende Erfindung betrifft ferner ein Verfahren unter Verwendung der Vorrichtung.

Nicht mehr verwendbare Bildröhren, wie sie in Fernsehgeräten, Computern, Monitorgeräten und anderen vorliegen, stellen eine starke Umweltbelastung und ein schwieriges Entsorgungsproblem dar.

Es ist bekannt, solche Geräte soweit zu demontieren, daß die sonstigen Geräteeinheiten von der Bildröhre getrennt vorliegen.

Die Bildröhre selbst, die aus verschiedenen Bestandteilen besteht, nämlich Schirmglas, Conusglas, das zumeist beschichtet ist, Halsglas, Masken mit Spann- und Maskenrahmen und Leuchtstoffbeschichtung wird im allgemeinen nach dem Stand der Technik zunächst zertrümmert, die groben Metallteile werden abgetrennt, daß verbleibende Material zerkleinert und durch übliche Trennverfahren wie Magnetabscheidung, Sichtung, Sieben, elektrostatische Abscheidung und Naßtrennung weiter aufgetrennt.

So wird beispielsweise in der DE-OS 41 30 531 ein Verfahren beschrieben, gemäß dem die Bildschirmröhre zunächst grob vorzerkleinert wird, anschließend gemahlen und daß metallhaltige Beschichtungsmaterial abgetrennt wird.

Gemäß DE-OS 41 00 346 werden die Bildröhren ebenfalls vorzerkleinert und die groben Eisenteile durch Magnetabscheidung abgetrennt. Die Nichteisenmetalle werden durch Wirbelstromscheidung abgetrennt, das Restgut wird nachzerkleinert und Metallbestandteile durch Sichtung und elektrostatische Abscheidung abgetrennt. Anschließend erfolgt eine Feinzerkleinerung und eine Naßtrennung unter Gewinnung der Metallfraktion.

Gemäß DE-OS 40 03 497 wird die Bildröhre zertrümmert und die Leuchtstoffbeschichtung mit Wasser abgetrennt.

Obgleich die Trennung flacher Glasscheiben in Teile mit geraden Schnittkanten durch Erhitzen der Glasscheibe mittels eines Rohres, in dem sich eine elektrische Widerstandsheizung befindet, durch die DE-OS 27 17 788 bekannt ist, sind thermische Trennverfahren dieser Art auf Bildröhren nicht angewandt worden, da gleichmäßiges Andrücken des Heizrohres und Erhitzen allein nicht zum Erfolg führen.

Auch in der US-PS 38 39 006 sind ein Verfahren und eine Vorrichtung beschrieben, um durch Anlegen einer elektrisch beheizbaren Drahtschlinge, z. B. um eine Glasflasche, und Erhitzen der Drahtschlinge bis ein Sprung in der Flasche eingetreten ist, Glasobjekte zu zertrennen, ohne daß dieses Verfahren jedoch Hinweise offenbart, auch Bildröhren an der Stelle, an der unterschiedliche Glassorten zusammentreffen, auf diese Weise zu trennen.

Wie die Untersuchungen der Anmelderin gezeigt haben, ist eine Trennung auf diese Weise bei Bildröhren nicht möglich.

Obgleich in Schwarz-Weiß-Fernsehbildröhren Conusglas und Schirmglas auch aus einer Glassorte bestehen können, sind die Gläser in den meisten Bildröhren verschieden. Es besteht daher ein wirtschaftliches Interesse, die Glassorten voneinander zu trennen und getrennt weiterzuverarbeiten. Eine Wiederverwendung der getrennten Gläser zur Herstellung neuer Bildröhren erfolgt im allgemeinen nicht, da die chemische Zusammensetzung von Bildröhrengläsern zu stark variiert. Es bestehen jedoch Wiederverwendungsmöglichkeiten beispielsweise in der Bauindustrie und glasverarbeitenden Industrie.

Im Schirmglasteil befinden sich Maske, Maskenrahmen und die Leuchtschicht. Erfindungsgemäß können diese Teile nach Trennen der Glasteile selektiv zurückgewonnen werden.

Der außen befindliche Spannrahmen kann nach Zertrümmern des Schirmglases ebenfalls zurückgewonnen werden.

Nach DE-OS 39 01 842 werden daher Conusglas und Schirmglas von den übrigen Bestandteilen mittels einer Trennscheibe, z. B. einer Diamantscheibe abgetrennt und die Leuchtstoffbeschichtung mit Wasser abgetrennt.

In der US-PS 39 97 311 ist ein Verfahren beschrieben, gemäß dem Bildröhren in Stirnplatte und trichterartigen Teil getrennt werden können, sofern die Teile durch eine spezielle Glasmasse miteinander verbunden sind. Zunächst wird die Stirnplatte einschließlich Nahtstelle in ca. 12%ige Salpetersäure getaucht und diese und damit auch der eingetauchte Teil der Bildröhre auf eine Temperatur von ca. 60 °C gebracht. Die Salpetersäure ätzt die verbindende Glasschmelze an.

Anschließend werden von oben auch die Stirnplatte und die Ecken der Bildröhre mit Wasser von 30 °C gesprüht. In einer weiteren Behandlungsstufe wird die Verbindungsnaht auch seitlich mit Wasser besprüht. Tritt keine Trennung von Stirnplatte und Trichter ein, so werden nochmals Stirnplatte und Ecken der Bildröhre auf 65 °C erhitzt.

Es ist auch ein Verfahren der Firma VIKOR, Bildröhrenwerk Berlin, bekannt, nach dem Conusteil und Schirmteil voneinander dadurch getrennt werden, daß man mit einem Heißgasstrahl den Übergangsbereich aufschmilzt. Auch Laserstrahlen sind zum Aufschmelzen eingesetzt worden.

Obgleich die mechanische Trennung und das Aufschmelzen des Übergangbereichs ermöglichen, die meist aus verschiedenen Glassorten bestehenden Anteile Conusglas und Schirmglas voneinander zu trennen, so sind diese Verfahren mit einem unerwünscht hohen technischen Aufwand und Zeitaufwand verbunden.

Nach wie vor bestand daher für den Fachmann die Aufgabe, ein wirtschaftlicheres Verfahren zu entwickeln, das es erlaubt, schnell und mit geringem Aufwand die genannten Glasteile zur getrennten Wiederverwertung voneinander zu trennen, um anschließend die sonstigen Bestandteile, wie Masken, Spannund Maskenrahmen und Leuchtstoffschicht entfernen zu können, wobei Aufschneiden, Anritzen mit zusätzlicher thermischer Behandlung oder Aufschmelzen als relativ aufwendige Verfahrensschritte vermieden werden sollten.

Der Anmelderin ist es nunmehr gelungen, eine überraschend vorteilhafte Vorrichtung zum Recyceln von Bildröhren unter Trennung von Conusglas und Schirmglas zu entwickeln, dadurch gekennzeichnet, daß diese einen Hubtisch zur Positionierung der Bildröhre auf demselben aufweist, einen an Führungseinrichtungen befestigten, um die Bildröhre anlegbaren, elektrisch beheizbaren Heizdraht aufweist, ein Meßorgan aufweist, um die Bildröhre durch Höhenverstellung des Hubtischs derart zu positionieren, daß der Heizdraht mittels der Führungseinrichtungen im gewünschten Trennbereich an die Bildröhre angelegt werden kann, Sprühdüsen zum Besprühen des erhitzten Bereichs der Bildröhre aufweist und eine Spannvorrichtung zum straffen Anlegen des Heizdrahtes an die Bildröhre aufweist.

Die Erfindung betrifft auch ein Verfahren unter Verwendung der erfindungsgemäßen Vorrichtung.

Mittels der erfindungsgemäßen Vorrichtung lassen sich die Glasteile auf einfache Weise sauber voneinander trennen, wobei man im Übergangsbereich, in dem die unterschiedlichen Glassorten zusammentreffen, bevorzugt an der Nahtstelle, eine lokale Erhitzung herbeiführt und anschließend den erhitzten Bereich abschreckt.

Vorzugsweise erfolgen diese Maßnahmen um den gesamten Umfang der Bildröhre herum.

Die erfindungsgemäße Vorrichtung weist einen Hubtisch auf, der unterschiedlich ausgebildet sein kann, z. B. als Gitter, Rost oder Rahmen, im einfachsten Fall jedoch als Platte. Er besteht im allgemeinen aus Metall, z. B. Stahl, Edelstahl, Aluminium und anderen, kann jedoch auch aus anderen genügend stabilen Materialien bestehen, wie z. B. Verbundmaterialien, Glas und dergleichen.

Die Bildröhre wird auf den Hubtisch mit der Bildschirmseite nach unten gelegt. Dies kann auf einfache Weise so erfolgen, daß die Bildröhre von der Seite auf den Hubtisch geschoben oder gehoben wird. Sie kann auch von oben auf den Hubtisch aufgelegt werden. Um die Bildröhre in die Erhitzungsposi tion zu bringen, wird der Hubtisch abgesenkt. Grundsätzlich kann er jedoch, je nach Anordnung des Erhitzungsbereichs auch nach oben verstellbar sein.

Die erfindungsgemäße Vorrichtung weist ferner einen elektrisch beheizbaren Draht auf, der bevorzugt an der Nahtstelle zwischen Conusglas und Bildschirmglas aufgelegt wird.

Der Heizdraht wird durch Führungseinrichtungen gehalten, die armartig, bevorzugt an den vier Eckpunkten, um den Hubtisch angeordnet sind. Eine größere Anzahl solcher Führungseinrichtungen ist ebenfalls möglich, z. B. an den Längsseiten des Hubtischs. Auch weniger als vier z. B. drei oder zwei Führungseinrichtungen können einsetzbar sein, wobei jedoch gesichert sein muß, daß der Heizdraht an der gewünschten Stelle fest angelegt werden kann.

Die Führungseinrichtungen sind in verschiedenen Richtungen bewegbar, vorzugsweise in diagonaler Richtung bezogen auf die Hubtischplatte und in den Längsrichtungen der Hubtischplatte.

Die Bewegung kann beispielsweise über Laufschienen erfolgen. Erfindungsgemäß kann auch wenigstens eine der Führungseinrichtungen fest installiert sein. Der Heizdraht wird durch die zum Hubtisch zugewandten vorderen Enden der Führungseinrichtung geführt, wobei der Heizdraht z. B. über Rollen an den Führungseinrichtungen bewegbar ist. Der Heizdraht ist über eine oder mehrere Zugeinrichtungen spannbar, wobei er über Aufwickelrollen geführt werden kann und das Spannen z. B. durch Gewichte an den Enden erfolgt. Die beschriebene Spanneinrichtung ist beispielhaft. Da dem Fachmann weitere Spanntechniken bekannt sind, sollen diese hier nicht weiter erläutert werden.

In der Höhe wird der Heizdraht vorzugsweise fest angeordnet. Etwa auf der gleichen Höhe des Heizdrahtes sind um den Hubtisch Sprühvorrichtungen, bevorzugt stationär, installiert. Durch diese bevorzugt als Düsen ausgebildeten Sprühorgane kann eine kalte Flüssigkeit auf den durch den Heizdraht zu erhitzenden Bereich der Bildröhre gesprüht werden. Bevorzugt wird Wasser als Sprühflüssigkeit eingesetzt.

An Stelle eines Drahtes können auch andere elektrisch beheizbare Vorrichtungen verwendet werden, wie Metallbänder oder sonstige elektrisch beheizbare Bänder oder Schnüre aus thermisch genügend stabilen Materialien oder punktuell anliegende, bandartige oder schnurartige Vorrichtungen mit ausreichend aneinanderliegenden, erhitzbaren und rund um den Umfang der Bildröhre anlegbaren Berührungsstellen.

Die Anzahl der Sprühdüsen ist variabel. Es soll jedoch erreicht werden, daß der zu erhitzende Bereich gezielt und schnell besprühbar ist, wobei die Sprühdauer bevorzugt einstellbar ist.

Um eine saubere Trennung von Conusglas und Schirmglas durchführen zu können, ist es erforderlich, die auf dem Hubtisch liegende Bildröhre in eine exakte Position zu bringen, so daß der Heizdraht präzise an die gewunschte Nahtstelle herangeführt werden kann.

Die Positionierung kann erfindungsgemäß automatisch oder auch manuell erfolgen. In einer erfindungsgemäßen Ausführungsform befindet sich auf der Hubtischebene an einer Ecke des Hubtischs eine bevorzugt im rechten Winkel ausgebildete Anlegevorrichtung, an welche die Bildröhre herangeschoben werden kann. Dieses Meßorgan wird auf die Höhe der gewünschten Schnittstelle gebracht. Hierdurch wird nach Ingangsetzen der Hubmechanik der Tisch soweit abgesenkt, daß der in der Höhe fest installierte Heizdraht exakt an die Bildröhre an der gewünschten Schnitt- bzw. Nahtstelle angelegt werden kann. Die Bewegung des Hubtischs in die gewünschte Position kann jedoch auch mit Hilfe eines Detektors erfolgen, der so angeordnet ist, daß er den Hubtisch in die gewünschte Position bringt, um die Trennung der Glassorten durchführen zu können. Die Positionierung kann auch ausschließlich manuell erfolgen.

Nachdem die Bildröhre in die gewünschte Position gebracht worden ist, wird der Heizdraht mittels der Führungseinrichtungen an die Bildröhre bis zum Aufliegen auf der vorgesehenen Schnitt- bzw. Nahtstelle herangefahren. Durch die Spannvorrichtung wird erreicht, daß der Heizdraht rund um die Bildröhre fest anliegt. Der Vorgang des Anlegens des Heizdrahtes an die Bildröhre kann ebenfalls automatisch oder manuell erfolgen. Durch die Verschiebbarkeit der Führungseinrichtungen in Diagonal- und Längsrichtung wird eine optimale, straffe Positionierung des Heizdrahtes ermöglicht.

Anschließend erfolgt eine elektrische Aufheizung des Heizdrahtes und damit eine Aufheizung der Schnittstelle, wobei die Heizdauer 2 Sekunden bis 5 Minuten, bevorzugt 1 Minute bis 3 Minuten beträgt.

Die installierte elektrische Beheizung weist bevorzugt eine maximale Spannung von 42 Volt auf. Obgleich grundsätzlich niedrigere Spannungen oder höhere Spannungen möglich sind, sollten aus Sicherheitsgründen 42 Volt nicht überschritten werden. Der Heizdraht bzw. das Heizband oder die Heizschnur kann aus einem Stück, jedoch auch aus mehreren Teilen bestehen, sofern gewährleistet ist, daß eine ausreichende Beheizung der vorgesehenen Schnittbzw. Nahtstelle gewährleistet ist.

Die erfindungsgemäße Vorrichtung weist Düsen auf, die so angeordnet sind, daß der erhitzte Bereich nach Beendigung des Heizvorgangs durch Besprühen mit einer Flüssigkeit, bevorzugt mit Wasser, schnell abgekühlt bzw. abgeschreckt werden kann. Nachdem der Heizdraht entfernt worden ist, treten die Düsen automatisch oder ggf. auch manuell gesteuert, in Tätigkeit. Der Heizdraht kann nach Abschalten des Stromes während des Abkühlvorgangs auch in auf der Bildröhre angelegter Position verbleiben. In diesem Falle können die Sprühdüsen beispielsweise durch das Abschalten des Stromes automatisch ingangsetzbar sein.

Auch beliebige andere Abkühlungsmethoden, die dem Fachmann geläufig sind, können angewandt werden, wie z. B. Beblasen mit kalten Gasen, wie z. B. mit Luft, Anlegen eines gekühlten bzw. angefeuchteten gekühlten Materials, wie Metallbänder, Drähte, Ringe, Schwämme usw., Auflegen von Eis und dergleichen mehr, wobei das Einwirken gekühlter bzw. feuchter Materialien bevorzugt mechanisiert wird, es kann jedoch auch mit Hand erfolgen. Grundsätzlich kann an Stelle von Wasser auch mit anderen bei dem Verfahrensablauf nicht entzündbaren Flüssigkeiten gearbeitet werden.

Die Dicke des zu erhitzenden Drahtes bzw. des Bandes oder der Schnur sowie die Breite des Bandes können in angemessenen Grenzen variiert werden, die Materialien sollen jedoch keinen zu hohen Stromverbrauch erfordern.

Draht, Bänder, Schnüre und dergleichen bestehen bevorzugt aus üblichem Widerstandsmetall bzw. enthalten übliches Widerstandsmetall. Es kann sich um Stahl, Edelstähle, Legierungen und andere Metalle handeln, die dem Fachmann bekannt sind.

Durch das Abkühlen tritt im Bereich des Erhitzens bzw. unter dem angelegten Heizdraht zuverlässig und mit großer Genauigkeit eine Trennung der Bildröhre in Conusglas und Schirmglas ein, so daß der Conusteil von dem Schirmteil abgehoben werden kann. Dies erfolgt vorteilhafterweise nachdem der Hubtisch wieder in die ursprüngliche Position gebracht worden ist.

Nach dem Trennen des Conusglases vom Schirmglas kann die Maske herausgenommen werden und aus dem Schirmglas die Leuchtstoffschicht entfernt werden. Dies kann nach beliebigen Methoden des Standes der Technik erfolgen, wie z. B. durch Abbürsten, Absaugen oder weniger bevorzugt durch Abspülen, z. B. mit Wasser und durch andere Verfahren. Auch bei Bildröhren, bei denen Conusglas und Schirmglas aus der gleichen Glassorte bestehen, ermöglicht die vorliegende Erfindung ein leichtes Öffnen der Bildröhre und damit ein leichtes Entfernen der Leuchtstoffschicht. Das Leuchtstoffmaterial kann über Filter gesammelt und wiederverwendet werden.

Ferner können Maske, Maskenrahmen und Spannrahmen entfernt und getrennt gesammelt werden. Alle Materialien können auf diese Weise sortenrein gewonnen werden und einer Wiederverwendung zugeführt werden.

Die Erfindung soll mit Hilfe der Figuren näher erläutert werden. In den Figuren ist die "Entschärfung" der Bildröhre, d. h. das Öffnen der Röhre am Halsglas unter Druckausgleich, die vor der Anwendung des erfindungsgemäßen Verfahrens erfolgt, nicht dargestellt.

Figur 1 entspricht der Sicht von oben auf die auf dem Hubtisch liegende Bildröhre.

Figur 2 stellt die Absenkung der Bildröhre in die Erhitzungsposition dar.

Figur 3 stellt eine Sicht von oben auf die Bildröhre mit angelegtem Heizdraht dar.

Figur 4 stellt eine beispielhafte Konstruktion einer Führungseinrichtung zum Festspannen der Bildröhre und Anlegen des Heizdrahtes dar.

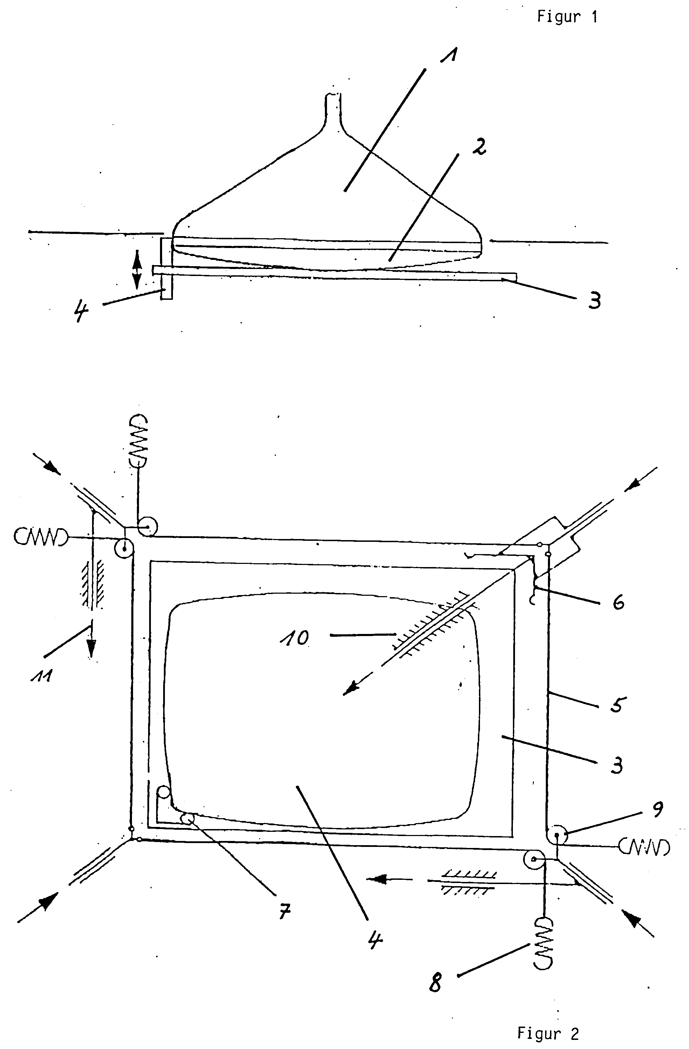

In Figur 1 kennzeichnet 1 das Conusglas, 2 das Schirmglas. 3 stellt den Hubtisch dar und 4 deutet den Höhenverstellmechanismus für den Hubtisch an.

In Figur 2 ist 3 wiederum der Hubtisch, 4 die Bildröhre, 5 der Heizdraht, 6 eine Führungseinrichtung mit Spannteil. 7 ist der Anschlag, an den die Bildröhre zur Höheneinstellung gebracht wird. 8 ist eine Spannvorrichtung für den Heizdraht, 9 ist eine Umlenkrolle. 10 gibt die diagonale Richtungsverschiebung an und 11 die Längsverschiebung.

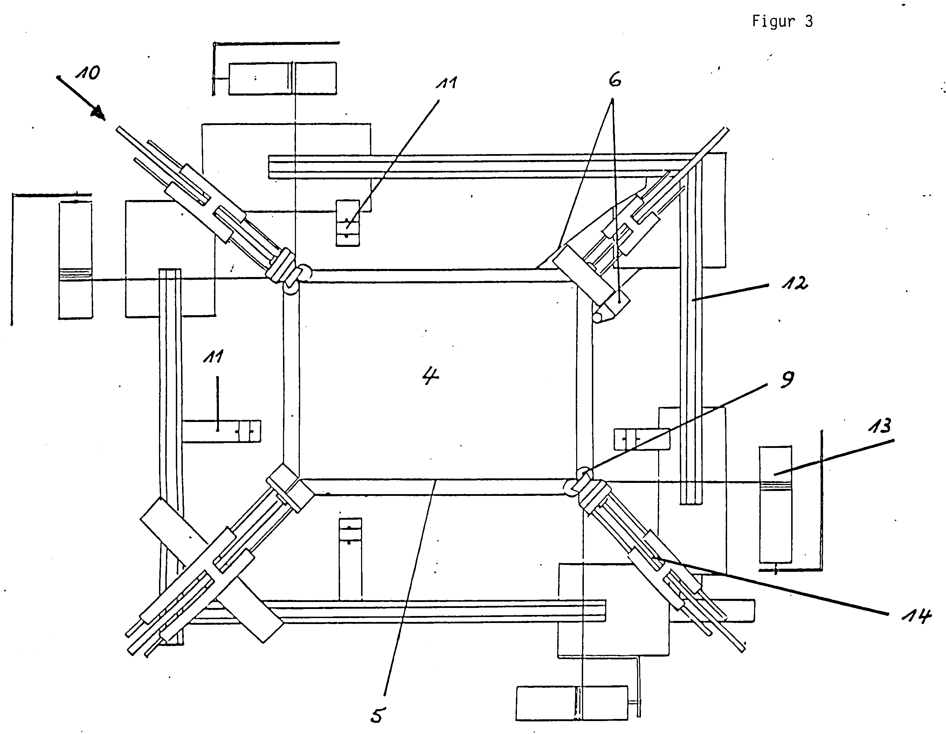

In Figur 3 ist 4 die Bildröhre, 5 der Heizdraht, 6 stellt die Führungseinrichtung mit Spannteil dar. 9 ist eine Umlenkrolle. 11 sind Sprühdüsen, 12 Laufschienen zur Längsverschiebung der Führungseinrichtungen. 13 ist eine Aufwicklungsrolle und 14 eine Drahtanlegevorrichtung.

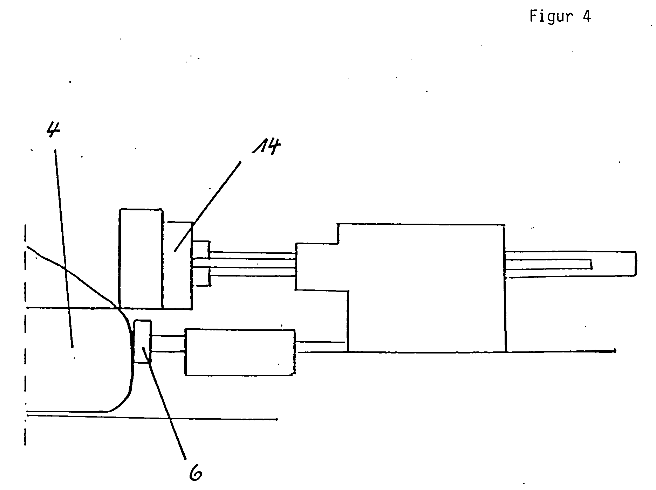

In Figur 4 ist 4 die Bildröhre, 14 die Drahtanlegevorrichtung und 6 der Spannteil der Führungseinrichtung.

Zur weiteren Erläuterung dient folgendes Beispiel:

### Beispiel

Als Heizdraht wird beispielhaft ein Kantal-D5D-Draht gewählt, der einen Durchmesser von 0,85 mm und einen Widerstand von 2,69 Ohm/m besitzt.

Die angelegte Spannung beträgt 40 Volt. Die Stromstärke beträgt 10 Ampere.

Die Erhitzungsdauer nach straffem Anlegen des Heizdrahtes auf den Übergangsbereich zwischen Conusglas und Schirmglas beträgt 2 Minuten. Anschließend wird durch Betätigung der Wasserdüsen abgeschreckt.

Es tritt ein glattes, sauberes Zerlegen der Bildröhre in Conusglas und Schirmglas ein.

Sofern an der Nahtstelle zwischen Schirmglas und Konusglas ein Spannband vorhanden ist, erfolgt die Trennung möglichst dicht oberhalb des Spannbandes.

Der getrennte Conusteil kann nach Anheben des Hubtisches nunmehr mittels einer Entnahmevorrichtung oder auch per Hand erfaßt und in einem Container gesammelt werden. Anschließend erfolgt die Demontage der Maske aus dem Schirmteil. Die Leuchtschicht wird aus dem Schirmteil z. B. mittels Abbürsten und Absaugen entfernt und auf einem Filter gesammelt. Der Schirmteil kann dann zerkleinert und das Spannband abgetrennt werden. Die gesamte Zerlegung der Bildröhre erfolgt nach der Rißbildung wie beschrieben auf besonders vorteilhafte Weise in einem trockenen Verfahren.

Das erfindungsgemäße Verfahren erlaubt im Dauerbetrieb die Zerlegung sehr großer Stückzahlen von Bildröhren auf bisher unerreicht einfache und wirtschaftliche Weise mit bisher unerreicht niedrigen Invest- und Betriebskosten. Es war für den Fachmann unvorhersehbar, daß sich räumliche, große Glaskörper, wie Bildröhren, auf die erfindungsgemäße Weise problemlos auftrennen lassen. Dementsprechend wurden bisher wesentlich aufwendigere Verfahren angewandt.

## Patentansprüche

1. Vorrichtung zur thermischen Auftrennung von Bildröhren in Conusglas und Schirmglas, dadurch gekennzeichnet, daß diese einen Hubtisch zur Positionierung der Bildröhre auf demselben aufweist, einen an Führungseinrichtungen befestigten, um die Bildröhre anlegbaren, elektrisch beheizbaren Heizdraht aufweist, ein Meßorgan aufweist, um die Bildröhre durch Höhenverstellung des Hubtischs derart zu positionieren, daß der Heizdraht mittels der Führungseinrichtungen im gewünschten Trennbereich an die Bildröhre angelegt werden kann, Sprühdüsen zum Besprühen des erhitzten Bereichs der Bildröhre aufweist und eine Spannvorrichtung zum straffen Anlegen des Heizdrahtes an die Bildröhre aufweist.

2. Vorrichtung nach Anspruch 1, dadurch gekennzeichnet, daß die Führungseinrichtungen Umlenkeinrichtungen aufweisen.

3. Vorrichtung nach wenigstens einem der Ansprüche 1 und 2, dadurch gekennzeichnet, daß die Führungseinrichtungen diagonal zum Hubtisch und/oder längs der Bildröhre bewegbar sind.

4. Vorrichtung nach wenigstens einem der Ansprüche 1 bis 3, dadurch gekennzeichnet, daß Spannvorrichtungen vorhanden sind, welche den Heizdraht straffen.

5. Vorrichtung nach wenigstens einem der Ansprüche 1 bis 4, dadurch gekennzeichnet, daß eine elektrische Installation zum Anlegen einer maximalen Spannung von ≦ 42 Volt am Heizdraht bzw. den Heizdrähten vorhanden ist.

6. Vorrichtung nach wenigstens einem der Ansprüche 1 bis 5, dadurch gekennzeichnet, daß diese eine automatische Regelung zur Verweilzeit des erhitzten Heizdrahtes auf der Bildröhre aufweist.

7. Vorrichtung nach wenigstens einem der Ansprüche 1 bis 6, dadurch gekennzeichnet, daß das Meßorgan zur Positionierung der Bildröhre als Detektor ausgebildet ist.

8. Vorrichtung nach wenigstens einem der Ansprüche 1 bis 6, dadurch gekennzeichnet, daß das Meßorgan als Anschlag ausgebildet ist, an den die auf dem Hubtisch liegende Bildröhre anlegbar ist.

9. Vorrichtung nach wenigstens einem der Ansprüche 1 bis 8, dadurch gekennzeichnet, daß der Hubtisch als Platte ausgebildet ist, auf die von der Seite die Bildröhre geschoben und/oder gehoben werden kann.

10. Vorrichtung nach wenigstens einem der Ansprüche 1 bis 9, dadurch gekennzeichnet, daß die Sprühdüsen Wassersprühdüsen sind.

11. Verfahren zum thermischen Auftrennen von Bildröhren in Conusglas und Schirmglas mittels der Vorrichtung nach den Ansprüchen 1 bis 10, dadurch gekennzeichnet, daß die Bildröhre auf einem Hubtisch positioniert wird, daß der Hubtisch mit Hilfe eines Meßorgans soweit mit der Bildröhre in der Höhe verstellt wird, daß ein elektrisch beheizbarer Heizdraht mittels Führungseinrichtungen an die Bildröhre im gewünschten Trennbereich angelegt werden kann, daß der durch Spanneinrichtungen gestraffte Heizdraht elektrisch erhitzt und nach dem Erhitzen des Trennbereichs bzw. der Trennlinie Wasser mittels Sprühdüsen auf diese aufgesprüht wird.

12. Verfahren nach Anspruch 11, dadurch gekennzeichnet, daß die Erhitzung 2 Sekunden bis 5 Minuten erfolgt, vorzugsweise 1 Minute bis 3 Minuten.

13. Verfahren nach wenigstens einem der Ansprüche 11 und 12, dadurch gekennzeichnet, daß das Erhitzen mittels einer angelegten Spannung von ≦ 42 Volt erfolgt.

14. Verfahren nach wenigstens einem der Ansprüche 11 bis 13, dadurch gekennzeichnet, daß der Heizdraht mittels an den Führungseinrichtungen vorhandenen Umlenkeinrichtungen um die Bildröhre gelegt wird.

15. Verfahren nach wenigstens einem der Ansprüche 11 bis 14, dadurch gekennzeichnet, daß Führungseinrichtungen zum Anlegen des Heizdrahtes diagonal und/oder längs der Bildröhre bewegt werden können.

16. Verfahren nach wenigstens einem der Ansprüche 11 bis 15, dadurch gekennzeichnet, daß der angelegte Heizdraht in der Längsrichtung der Bildröhre gestrafft wird.

17. Verfahren nach wenigstens einem der Ansprüche 11 bis 16, dadurch gekennzeichnet, daß die Einstellung der Verweilzeit des Heizdrahtes an der Bildröhre zum Erhitzen derselben automatisch erfolgt.

18. Verfahren nach wenigstens einem der Ansprüche 11 bis 17, dadurch gekennzeichnet, daß die Positionierung der Bildröhre vor Anlegen des Heizdrahtes mittels eines Detektors erfolgt..

19. Verfahren nach wenigstens einem der Ansprüche 11 bis 17, dadurch gekennzeichnet, daß die Positionierung der Bildröhre durch Anlegen der Bildröhre an einen Anschlag erfolgt, die in der Höhe zu verstellende Distanz gemessen wird und anschließend die Bildröhre in die gewünschte Stellung positioniert wird.

20. Verfahren nach wenigstens einem der Ansprüche 11 bis 19, dadurch gekennzeichnet, daß die Bildröhre von der Seite auf den Hubtisch gehoben bzw. geschoben wird.

21. Verfahren nach wenigstens einem der Ansprüche 11 bis 20, dadurch gekennzeichnet, daß aus den Sprühdüsen Wasser auf die erhitzte Trennlinie gesprüht wird.

22. Verwendung der Vorrichtung nach den Ansprüchen 1 bis 10 zum Trennen von Bildröhren in Schirmglas und Conusglas.
